# EUROPEAN PATENT APPLICATION

(11) **EP 4 712 553 A1**
(43) Date of publication of application: **18.03.2026**
(21) Application number: 23936142.1
(22) Date of filing: 11.05.2023
(51) Int. Cl.: H04W 28/24

(54) **INFORMATION INDICATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Jinhua, Beijing 100085 (CN); LI, Lisi, Beijing 100085 (CN)
(74) Representative: Gunzelmann, Rainer
(86) International application number: PCT/CN2023/093633
(87) International publication number: WO 2024/229827

(57) **Abstract**

Provided in the embodiments of the present disclosure are an information indication method and apparatus, and a communication device and a storage medium. The method comprises: sending first information to a second communication node, wherein the first information is used for indicating the capability of a first communication node to perform quality of service (QoS) processing based on a data packet set. Compared with the situation in which first information is not sent to a second communication node, the present disclosure can be adapted to the capability of a first communication node to perform quality of service (QoS) processing based on a data packet set. In this way, the quality of service (QoS) processing based on a data packet set is performed more efficiently and more reliably.

## Description

### TECHNICAL FIELD

The disclosure relates to the field of communication technologies, and in particular to an information indication method and apparatus, a communication device, and a storage medium.

### BACKGROUND

A Quality of Service (QoS) handling mechanism for a packet set is introduced to an Extended Reality and Media (XRM) service and an interactive media service. QoS level handling of the packet set in a user plane and a control plane is provided to the core network, that is, packet set QoS parameters and a dynamic tagging mechanism for the packets are introduced. This allows for packet discarding based on the packet set. However, in some scenarios, a network node does not support the packet set QoS handling mechanism.

### SUMMARY

The present disclosure provides an information indication method and apparatus, a communication device, and a storage medium.

According to a first aspect of the present disclosure, an information indication method is provided. The method is performed by a first communication node, and the method includes:
sending first information to a second communication node,
where the first information indicates a capability of the first communication node of performing quality of service (QoS) handling based on a packet set.

According to a second aspect of the present disclosure, an information indication method is provided. The method is performed by a second communication node, and the method includes:
receiving first information sent by a first communication node,
where the first information indicates a capability of the first communication node of performing QoS handling based on a packet set.

According to a third aspect of the present disclosure, an information indication apparatus is provided. The apparatus includes:
a sending module, configured to send first information to a second communication node,
where the first information indicates a capability of a first communication node of performing QoS handling based on a packet set.

According to a fourth aspect of the present disclosure, an information indication apparatus is provided. The apparatus includes:
a receiving module, configured to receive first information sent by a first communication node,
where the first information indicates a capability of the first communication node of performing QoS handling based on a packet set.

According to a fifth aspect of the present disclosure, a communication device is provided. The communication device includes:
a processor; and
a memory, configured to store instructions executable by the processor,
where the processor is configured to implement the method described in any embodiment of the present disclosure when running the executable instructions.

According to a sixth aspect of the present disclosure, a computer storage medium is provided. The computer storage medium stores a computer executable program that, when executed by a processor, implements the methods described in any embodiment of the present disclosure.

In embodiments of the disclosure, the first information is sent to the second communication node, where the first information indicates the capability of the first communication node of performing the QoS handling based on the packet set. Here, the first communication node sends the first information to the second communication node, where the first information indicates the first communication' capability of performing the QoS handling based on the packet set. After receiving the first information, the second communication node can determine whether the first communication node has the capability of performing the QoS handling based on the packet set. Compared to a situation of not sending the first information to the second communication node, the second communication node is adapted to the first communication node's capability of performing the QoS handling based on the packet set, such that the execution of the QoS handling based on the packet set is more efficient and reliable.

### BRIEF DESCRIPTION OF THE DRAWINGS

Fig. 1 is a schematic diagram of a structure of a wireless communication system according to an example embodiment.
Fig. 2 is a flowchart illustrating an information indication method according to an example embodiment.
Fig. 3 is a flowchart illustrating an information indication method according to an example embodiment.
Fig. 4 is a flowchart illustrating an information indication method according to an example embodiment.
Fig. 5 is a flowchart illustrating an information indication method according to an example embodiment.
Fig. 6 is a flowchart illustrating an information indication method according to an example embodiment.
Fig. 7 is a flowchart illustrating an information indication method according to an example embodiment.
Fig. 8 is a schematic diagram of an information indication apparatus according to an example embodiment.
Fig. 9 is a schematic diagram of an information indication apparatus according to an example embodiment.
Fig. 10 is a schematic diagram of a structure of a terminal according to an example embodiment.
Fig. 11 is a block diagram illustrating a base station according to an example embodiment.

### DETAILED DESCRIPTION

Example embodiments will now be described in detail, examples of which are illustrated in the accompanying drawings. When the following description refers to the accompanying drawings, unless otherwise indicated, the same numbers in different drawings represent the same or similar elements. Implementations described in the following example embodiments do not represent all implementations consistent with the embodiments of the present disclosure. Rather, they are merely examples of apparatuses and methods consistent with some aspects of the embodiments of the present disclosure as detailed in the appended claims.

The terms used in the present disclosure are for the purpose of describing particular embodiments only and are not intended to limit the scope of the present disclosure. The singular forms "a", "an" and "the" used in the present disclosure and the appended claims are also intended to include the plural forms, unless the context clearly indicates otherwise. It should also be understood that the term "and/or" as used herein refers to and includes any or all possible combinations of one or more associated listed items.

It should be understood that although the terms first, second, third, etc. may be used to describe various information in the embodiments of the present disclosure, such information should not be limited to these terms. These terms are only used to distinguish information of the same type from one another. For example, without departing from the scope of the embodiments of the present disclosure, the first information may also be referred to as the second information, and similarly, the second information may also be referred to as the first information. Depending on the context, the word "if' as used here can be interpreted as "when", "in a case that", or "in response to determining that"

For the sake of brevity and ease of understanding, the present disclosure uses the terms "greater than" or "less than" to describe size relationships. However, it will be understood by those skilled in the art that the term "greater than" also includes the meaning of "greater than or equal to", and "less than" also includes the meaning of "less than or equal to".

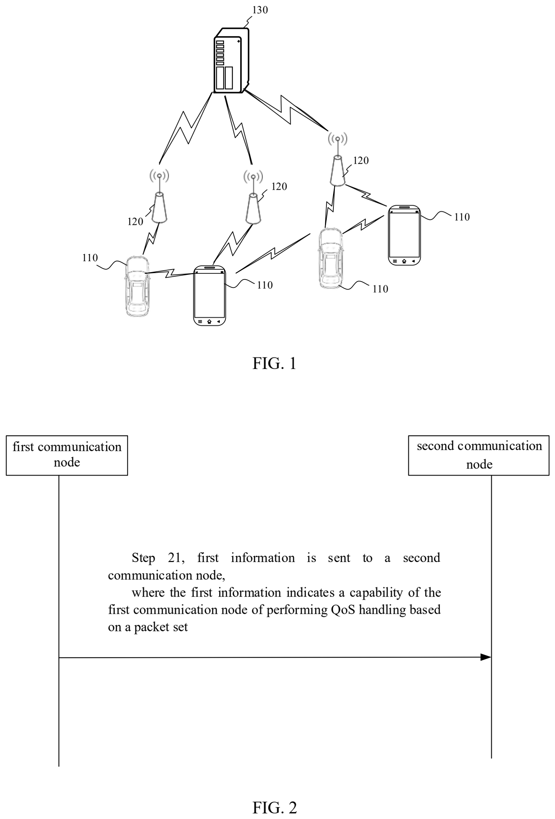

Please refer to Fig. 1, which shows a schematic diagram of a structure of a wireless communication system provided in an embodiment of the present disclosure. As shown in Fig. 1, the wireless communication system is a communication system based on mobile communication technologies. The wireless communication system may include: several user equipments (UEs) 110 and several base stations 120.

The UE 110 may be a device that provides voice and/or data connectivity to the user. The UE 110 can communicate with one or more core networks via a Radio Access Network (RAN). The UE 110 may be an Internet of Things (IoT) UE, such as a sensor device, a mobile phone, and a computer with IoT UE, for example, it may be a fixed, portable, pocket-sized, handheld, computer-embedded, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment. Alternatively, the UE 110 may also be a device of an unmanned aerial vehicle. Alternatively, the UE 110 may also be a vehicle-mounted device, such as a vehicle computer with wireless communication capabilities, or a wireless user equipment connected to an external vehicle computer. Alternatively, the UE 110 may also be a roadside device, such as a street light, traffic light, or other roadside device with wireless communication capabilities.

The base station 120 may be a network-side device in a wireless communication system. The wireless communication system may be a fourth-generation mobile communication (4G) system, also known as a Long Term Evolution (LTE) system; or it may be a 5G system, also known as a New Radio (NR) system or a 5G NR system. Alternatively, the wireless communication system may be a next generation beyond 5G. In the 5G system, the access network may be referred to as a New Generation-Radio Access Network (NG-RAN).

The base station 120 may be an evolved NodeB (eNB) used in a 4G system. Alternatively, the base station 120 may also be a next-generation NodeB (gNB) in a 5G system that adopts a central-distributed architecture. When the base station 120 adopts the central-distributed architecture, it typically includes a central unit (CU) and at least two distributed units (DUs). The central unit is equipped with a protocol stack consisting of a Packet Data Convergence Protocol (PDCP) layer, a Radio Link Control (RLC) layer, and a Media Access Control (MAC) layer. The distributed unit is equipped with a Physical (PHY) layer protocol stack. The specific implementation of the base station 120 is not limited in the embodiments of the present disclosure.

The base station 120 and the UE 110 may establish a wireless connection via an air interface. In different implementations, the wireless air interface is a wireless air interface based on a fourth-generation mobile communication network technology (4G) standard; or the wireless air interface is a wireless air interface based on a fifth-generation mobile communication network technology (5G) standard, such as a new radio; or the wireless air interface may also be a wireless air interface based on a next-generation mobile communication network technology standard based on 5G.

In some embodiments, an End to End (E2E) connection may also be established between the UEs 110. Examples include vehicle-to-vehicle (V2V), vehicle-to-infrastructure (V2I), and vehicle-to-pedestrian (V2P) communication scenarios in vehicle-to-everything (V2X) communication.

Here, the UE mentioned above may be considered as the terminal in the following embodiments.

In some embodiments, the wireless communication system described above may further include a network management device 130.

Several base stations 120 are connected to network management device 130, respectively. The network management device 130 may be a core network device in the wireless communication system. For example, the network management device 130 may be a Mobility Management Entity (MME) in an Evolved Packet Core (EPC). Alternatively, the network management device may be another core network device, such as a Serving Gateway (SGW), a Public Data Network Gateway (PGW), a Policy and Charging Rules Function (PCRF), or a Home Subscriber Server (HSS). The implementation of the network management device 130 is not limited in the embodiments of the present disclosure.

To facilitate understanding by those skilled in the art, the present disclosure provides multiple embodiments to clearly illustrate the technical solutions of the embodiments of the present disclosure. Of course, those skilled in the art will understand that the multiple embodiments provided in the present disclosure can be executed individually, or may be executed together with the methods of other embodiments in the present disclosure, or may be executed individually or in combination with some methods in other related arts, which is not limited in the present disclosure.

To better understand the embodiments of the present disclosure, a wireless communication scenario is described as follows.

When a core network needs to send data to a terminal, it sends a paging message to a base station. According to Tracking Area (TA) list information in the paging message sent by the core network, the base station sends the paging message in a cell that belongs to the TA list. The terminal receives the paging message sent by the base station at its own paging occasion. Typically, one TA may cross multiple base stations or multiple cells under multiple base stations.

XR awareness in NG-RAN relies on QoS flows, Packet Data Unit (PDU) sets, data bursts, and traffic assistance information. When a QoS flow is enabled with PDU-based QoS handling by 5GC, PDU-based QoS parameters may be provided by a Session Management Function (SMF) to a gNB as part of a QoS profile of the QoS flow.

PDU Set Delay Budget (PSDB): a time between reception of a first PDU (at a UPF in DL, at a UE in UL) and a successful delivery of a last arrived PDU of the PDU Set (at the UE in DL, at the UPF in UL). A QoS Flow is associated with only one PSDB for both UL and DL, and when available, it supersedes the PDB.

PDU Set Error Rate (PSER): an upper bound for a rate of non-congestion related PDU Set losses between an RAN and a UE. A QoS Flow is associated with only one PSER for both UL and DL, and when available, it supersedes the PER.

Note 1: in this release, a PDU set is considered as successfully delivered only when all PDUs of the PDU Set are delivered successfully.

PDU Set Integrated Handling Information (PSIHI): indicates whether all PDUs of a PDU Set are needed for the usage of the PDU Set by an application layer.

Note 2: the PDU Set QoS parameters are common for all PDU Sets within a QoS flow.

In addition, the UPF may identify PDUs that belong to PDU Sets, and may determine the following PDU Set Information, which it sends to the NG-RAN in a General Packet Radio Service (GPRS) Tunnel Protocol User Plane (GTP-U) header:
PDU Set Sequence Number;
Indication of End PDU of the PDU Set;
PDU Sequence Number within a PDU Set;
PDU Set Size in bytes;
PDU Set Importance (PSI), which identifies the relative importance of a PDU Set compared to other PDU Sets within a QoS Flow.

Note 3: the NG-RAN may use the PSI within a QoS Flow for discarding in presence of congestion.

As can be seen, the Packet Set QoS handling mechanism is introduced into the XR, specifically for the core network, Packet Set QoS level handling at a user plane and a control plane is introduced. That is, Packet Set QoS parameters are introduced at the user plane, while a dynamic tagging mechanism for packets (i.e., marking attributes of packets in the GTPU header) is introduced at the user plane.

One goal is to support packet set-based packet discarding, as follows:

For PDCP discard operation in uplink, the timer-based discard operation (when configured) applies to all SDUs/PDUs belonging to the same PDU Set.

When the PSIHI is set for a QoS flow, as soon as one PDU of a PDU set is known to be lost, the remaining PDUs of the PDU Set may be considered as no longer needed by the application and may be subject to discard operation at the transmitter to free up radio resources.

Note: it cannot always be assumed that the remaining PDUs are not useful and can safely be discarded. Also, in case of Forward Error Correction (FEC), active discarding of PDUs when assuming that a large enough number of packets have already been transmitted for FEC to recover without the remaining PDUs is not recommended, as it might trigger an increase of FEC packets.

Note: the above note hints at configuring the discarding.

In case of congestion, the PSI may be used for PDU set discarding and in uplink, a PDU set discard mechanism taking the PSI into account will be introduced.

However, if a base station does not support the Packet set QoS, the core network does not need to perform this type of operation, and does not need to notify the base station of Packet set QoS separately in the control plane and user plane, thus avoiding unnecessary operations. Similarly, for a terminal, if the terminal does not support the Packet set QoS, the base station does not need to notify the base station of parameters processed by the Packet set QoS, thus reducing unnecessary operations. It is worth considering negotiating certain assistance information between the terminal, the base station, and the core network.

As shown in Fig. 2, an embodiment of the present disclosure provides an information indication method. The method is performed by a first communication node, and the method includes the following step.

Step 21, first information is sent to a second communication node,
where the first information indicates a capability of the first communication node of performing QoS handling based on a packet set.

In an embodiment, the capability of the QoS handling based on the packet set may be a capability possessed by the first communication node, and this capability may or may not be activated. In an embodiment, the first communication node may enable or activate the capability, and the capability may be an enabled or activated capability.

The first communication node and/or the second communication node in the present disclosure may be a terminal, an access network device, or a core network device.

The terminal involved in the present disclosure may be, but is not limited to, a mobile phone, a wearable device, a vehicle-mounted terminal, a roadside unit (RSU), a smart home terminal, an industrial sensing device, and/or a medical device, etc. In some embodiments, the terminal may be a Redcap terminal or a new radio (NR) terminal of a predetermined release (e.g., an R17 NR terminal), which is not limited in the present disclosure.

The access network device involved in the present disclosure may be a base station, and the base station may be a base station in fifth-generation mobile communication technology or other evolved base stations, which is not limited in the present disclosure.

In an embodiment, the packet set may include a PDU set or a protocol data unit (PDU) set. In some scenarios, the terms "packet data unit set" and "protocol data unit set" in the present disclosure may be used interchangeably.

The core network device involved in the present disclosure may be a network function (NF).

In an implementation, one of the following cases may apply:
the first communication node is an access network device, and the second communication node is an access network device;
the first communication node is an access network device, and the second communication node is a core network device;
the first communication node is a gNB central unit (gNB-CU), and the second communication node is a gNB distributed unit (gNB-DU);
the first communication node is a terminal, and the second communication node is an access network device;
the first communication node is a terminal, and the second communication node is a core network device; or
the first communication node is a first core network device, and the second communication node is a second core network device.

For example, the core network device may be an Access and Mobility Management Function (AMF), a User Plane Function (UPF), or a Session Management Function (SMF).

It should be noted that the above combinations of communication nodes are mainly based on the realization of information exchange between different communication nodes and specific implementation examples. In addition to the above combinations, other combinations may appear as the network evolves, which is not limited here.

In an embodiment, the first communication node is a first access network device, and the second communication node is a second access network device. The first access network device sends the first information to the second access network device, where the first information indicates a capability of the first access network device of performing QoS handling based on a packet set.

In an embodiment, the first communication node is an access network device, and the second communication node is a core network device. The access network device sends the first information to the core network device, where the first information indicates a capability of the access network device of performing QoS handling based on a packet set.

In an embodiment, the first communication node is a gNB-CU, and the second communication node is a gNB-DU. The gNB-CU sends the first information to the gNB-DU, where the first information indicates a capability of the gNB-CU of performing QoS handling based on a packet set.

In an embodiment, the first communication node is a terminal, and the second communication node is an access network device. The terminal sends the first information to the access network device, where the first information indicates a capability of the terminal of performing QoS handling based on a packet set.

In an embodiment, the first communication node is a terminal, and the second communication node is a core network device. The terminal sends the first information to the core network device, where the first information indicates a capability of the terminal of performing QoS handling based on a packet set.

In an embodiment, the first information is sent to the second communication node via a non-UE-associated signaling procedure, where the first information indicates the capability of the first communication node of performing the QoS handling based on the packet set.

In an embodiment, in response to an NG interface establishment, the first communication node sends the first information to the second communication node via an NG interface establishment request message. The first information indicates the capability of the first communication node of performing the QoS handling based on the packet set. The first communication node is an access network device, and the second communication node is a core network device.

For example, in an NR system, when an NG interface is established, a base station may send base station access layer capability information to a core network device via an NG SETUP REQUEST message, where the base station access layer capability information includes the first information, and the first information indicates a capability of the base station of performing QoS handling based on a packet set.

In an embodiment, in response to an NG interface update, the first communication node sends the first information to the second communication node via a radio access network configuration update message. The first information indicates the capability of the first communication node of performing the QoS handling based on the packet set. The first communication node is an access network device, and the second communication node is a core network device.

For example, in an NR system, when an NG interface is updated, a base station may send base station access layer capability information to a core network device via an RAN CONFIGURATION UPDATE message, where the base station access layer capability information includes the first information, and the first information indicates a capability of the base station of performing QoS handling based on a packet set.

Thus, an SMF does not need to send a PDU Set QoS parameter to the base station, and a UPF does not need to identify PDUs belonging to the PDU set and send them to an NG-RAN in a GTP-U header.

In an embodiment, in response to an Xn interface establishment, the first communication node sends the first information to the second communication node via an Xn interface establishment request message or an Xn establishment response message. The first information indicates the capability of the first communication node of performing the QoS handling based on the packet set. The first communication node is an access network device, and the second communication node is an access network device adjacent to the first communication node.

For example, in an NR system, when an XN interface is established, a base station may send base station access layer capability information to a neighboring base station via an XN SETUP REQUEST message or an XN SETUP RESPONSE message, where the base station access layer capability information includes the first information, and the first information indicates a capability of the base station of performing QoS handling based on a packet set.

In an embodiment, in response to an Xn interface update, the first communication node sends the first information to the second communication node via a radio access network node configuration update message or a radio access network node configuration update feedback message. The first information indicates the capability of the first communication node of performing the QoS handling based on the packet set. The first communication node is an access network device, and the second communication node is an access network device adjacent to the first communication node.

For example, in an NR system, when an Xn interface is updated, a base station may send base station access layer capability information to a neighboring base stations via an NG-RAN NODE CONFIGURATION UPDATE message or an NG-RAN NODE CONFIGURATION UPDATE ACKNOWLEDGE message, where the base station access layer capability information includes the first information, and the first information indicates a capability of the base station of performing QoS handling based on a packet set.

Therefore, when handing over of the XR service, the base station that supports the PDU Set QoS handling may be selected as much as possible during the handover.

In an embodiment, in response to an F1 application protocol (F1AP) interface establishment, the first communication node sends the first information to the second communication node via an F1AP interface establishment request message. The first information indicates the capability of the first communication node ofperforming the QoS handling based on the packet set. The first communication node is a gNB-DU, and the second communication node is a gNB-CU.

For example, in an NR system, when an F1AP interface is established, a gNB-DU may send gNB-DU access layer capability information to a gNB-CU via an F1 SETUP REQUEST message, where the gNB-DU access layer capability information includes the first information, and the first information indicates a capability of the gNB-DU of performing QoS handling based on a packet set.

In an embodiment, in response to an F1AP interface update, the first communication node sends the first information to the second communication node via a base station distribution unit configuration update message. The first information indicates the capability of the first communication node of performing the QoS handling based on the packet set. The first communication node is a gNB-DU, and the second communication node is a gNB-CU.

For example, in an NR system, when an F1AP interface is updated, a gNB-DU may send gNB-DU access layer capability information to a gNB-CU via a GNB-DU CONFIGURATION UPDATE message, where the gNB-DU access layer capability information includes the first information, and the first information indicates a capability of the gNB-DU of performing QoS handling based on a packet set.

In an embodiment, the first information is sent to the second communication node at a granularity of base station or cell. The first information indicates the capability of the first communication node of performing the QoS handling based on the packet set.

In an embodiment, the first information is sent to the second communication node. The first information indicates the capability of the first communication node of performing the QoS handling based on the packet set. The capability includes at least one of:
a capability of handling a PSDB based on a PDU;
a capability of handling a PSER based on a PDU; or
a capability of packet discarding based on a PDU.

For example, if a target base station does not support packet set-based packet discarding, an original base station does not need to send assistance information indicating the packet set-based packet discarding.

In an embodiment, the first information is sent to the second communication node via a UE-associated signaling procedure, where the first information indicates the capability of the first communication node of performing the QoS handling based on the packet set.

In an embodiment, in response to completing a cell handover, the first communication node sends the first information to the second communication node via a path conversion request message. The first information indicates the capability of the first communication node of performing the QoS handling based on the packet set. The first communication node is an access network device, and the second communication node is a core network device.

For example, in response to completing a cell handover, a target base station sends the first information to a base station via a path conversion request message, where the first information indicates a capability of the target base station of performing QoS handling based on a packet set.

For example, when an XR service is handed over from a base station that does not support the PDU Set QoS handling to a base station that supports the PDU Set QoS handling, the new base station may send the PDU Set QoS handling capability to a core network device. At this time, the core network device will continue to perform the above PDU Set QoS handling function.

In an embodiment, in response to completing a connection establishment, the first communication node sends the first information to the second communication node via an initial UE message. The first information indicates the capability of the first communication node of performing the QoS handling based on the packet set. The first communication node is an access network device, and the second communication node is a core network device.

In an embodiment, in response to completing a connection establishment, a base station accessed by a terminal sends the first information to a core network device via an initial UE message. The first information indicates a capability of the base station of performing QoS handling based on a packet set.

In an embodiment, after a handover or connection establishment procedure is completed, the first information is sent to the second communication node at a granularity of terminal, PDU session, or QoS flow.

In an embodiment, in response to performing an NG-based handover, the first communication node sends the first information to the second communication node via a handover failure message or a handover request response message. The first information indicates the capability of the first communication node of performing the QoS handling based on the packet set. The first communication node is an access network device, and the second communication node is a core network device.

In an embodiment, for an NR system, during an NG-based handover, a base station may send base station access layer capability information to a core network device via a HANDOVER FAILURE or a handover request response message, where the base station access layer capability information includes the first information, and the first information indicates a capability of the base station of performing QoS handling based on a packet set.

In an embodiment, in response to performing an Xn-based handover, the first communication node sends the first information to the second communication node via a handover failure message or a handover request response message. The first information indicates the capability of the first communication node of performing the QoS handling based on the packet set. The first communication node is an access network device, and the second communication node is an access network device.

In an embodiment, for an NR system, during an Xn-based handover, a target base station may notify a source base station of its access layer capability information via a HANDOVER FAILURE or a handover request response message, where the base station access layer capability information includes the first information, and the first information indicates a capability of the base station of performing QoS handling based on a packet set.

For example, the HANDOVER FAILURE message is expanded, which may be adding a cause value, for example, the cause value indicates that the PDU Set QoS handling is not supported or is not allowed.

In an embodiment, during a handover of NG or Xn, the first information is sent to the second communication node at the granularity of terminal, PDU session, or QoS flow. The first information indicates the capability of the first communication node of performing the QoS handling based on the packet set.

In an embodiment, the first information is sent to the second communication node via an attach request message, where the first information indicates the capability of the first communication node of performing the QoS handling based on the packet set. The first communication node is a terminal, and the second communication node is a core network device. Here, the granularity of sending the first information to the second communication node may be per terminal, per PDU session, or per QoS flow. Here, the attach request message may be a request message sent in an attach procedure of establishing a terminal context. The attach request message may be a non-access stratum (NAS) signaling message, which may be carried by RRCConnectionSETupComplete (a last message for establishing a Radio Resource Control (RRC) connection).

In an embodiment, the first information is sent to the second communication node via a register request message, where the first information indicates the capability of the first communication node of performing the QoS handling based on the packet set. The first communication node is a terminal, and the second communication node is a core network device. Here, the granularity of sending the first information to the second communication node may be per terminal, per PDU session, or per QoS flow. Here, the register request message may be a message sent in the process of the terminal registering with the network, and the register request message is used to request the completion of the terminal's registration in the network.

In an embodiment, the first communication node is a terminal, and the second communication node is a base station. The terminal sends the first information to the base station. In response to the base station determining, based on the capability, that the terminal supports the packet discarding based on a PDU, the base station configures an uplink parameter of the packet discarding based on the PDU and/or a parameter of packet discarding based on PSI in a congestion condition. Here, the first information may be sent to the base station at the granularity of terminal or Data Radio Bearer (DRB), and the first information indicates the capability of the first communication node of performing the QoS handling based on the packet set. It should be noted that, in some scenarios, the rules in the terminal and the access network may include mapping a QoS flow to a DRB, and the first information may be sent to the base station at the granularity of DRB.

In an embodiment, the terminal reports the first information to the core network via an attach request/register request. Then, the core network informs the base station that the terminal does not support uplink packet set-based packet discarding. In this case, the base station may not configure a PSI-based discard timer for the terminal. Here, the first information may be sent to the core network device at the granularity of terminal, PDU session, or QoS flow, and the first information indicates the capability of the first communication node of performing the QoS handling based on the packet set.

In an embodiment, in response to sending the first information to the second communication node at the granularity of terminal, for the terminal, the first communication node notifies the second communication node that it has the capability of the QoS handling capability based on the packet set or has activated the capability of the QoS handling based on the packet set; in response to sending the first information to the second communication node at the granularity of DRB, for the DRB, the first communication node notifies the second communication node that it has the capability of the QoS handling based on the packet set or has activated the capability of the QoS handling based on the packet set; in response to sending the first information to the second communication node at the granularity of PDU session, for the PDU session, the first communication node notifies the second communication node that it has the capability of the QoS handling based on the packet set or has activated the capability of QoS handling based on the packet set; in response to sending the first information to the second communication node at the granularity of QoS flow, for the QoS flow, the first communication node notifies the second communication node that it has the capability of the QoS handling based on the packet set or has activated the capability of the QoS handling based on the packet set.

In the embodiments of the disclosure, the first information is sent to the second communication node, where the first information indicates the capability of the first communication node of performing the QoS handling based on the packet set. Here, the first communication node sends the first information to the second communication node, and the first information indicates that the capability of the first communication node of performing the QoS handling based on the packet set. Upon receiving the first information, the second communication node can determine whether the first communication node has the capability of performing the QoS handling based on packet set. Compared to a situation of not sending the first information to the second communication node, the second communication node is adapted to the first communication node's capability of performing the QoS handling based on the packet set, such that the execution of the QoS handling based on the packet set is more efficient and reliable.

It should be noted that those skilled in the art will understand that the methods provided in the embodiments of the present disclosure can be executed alone or together with some methods in the embodiments of the present disclosure or some methods in related arts.

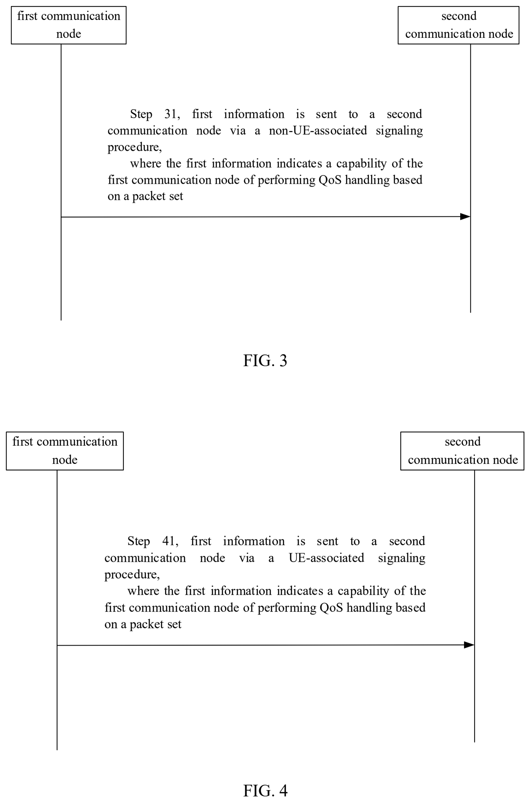

As shown in Fig. 3, an embodiment of the present disclosure provides an information indication method. The method is performed by a first communication node, and the method includes the following step.
Step 31, first information is sent to a second communication node via a non-UE-associated signaling procedure,
where the first information indicates a capability of the first communication node of performing QoS handling based on a packet set.

In an embodiment, in response to an NG interface establishment, the first communication node sends the first information to the second communication node via an NG interface establishment request message. The first information indicates the capability of the first communication node of performing the QoS handling based on the packet set. The first communication node is an access network device, and the second communication node is a core network device.

In an embodiment, in response to an NG interface update, the first communication node sends the first information to the second communication node via a radio access network configuration update message. The first information indicates the capability of the first communication node of performing the QoS handling based on the packet set. The first communication node is an access network device, and the second communication node is a core network device.

In an embodiment, in response to an Xn interface establishment, the first communication node sends the first information to the second communication node via an Xn interface establishment request message or an Xn establishment response message. The first information indicates the capability of the first communication node of performing the QoS handling based on the packet set. The first communication node is an access network device, and the second communication node is an access network device adjacent to the first communication node.

In an embodiment, in response to an Xn interface update, the first communication node sends the first information to the second communication node via a radio access network node configuration update message or a radio access network node configuration update feedback message. The first information indicates the capability of the first communication node of performing the QoS handling based on the packet set. The first communication node is an access network device, and the second communication node is an access network device adjacent to the first communication node.

In an embodiment, in response to an F1AP interface establishment, the first communication node sends the first information to the second communication node via an F1AP interface establishment request message. The first information indicates the capability of the first communication node of performing the QoS handling based on the packet set. The first communication node is a gNB-DU, and the second communication node is a gNB-CU.

In an embodiment, in response to an F1AP interface update, the first communication node sends the first information to the second communication node via a base station distribution unit configuration update message. The first information indicates the capability of the first communication node of performing the QoS handling based on the packet set. The first communication node is a gNB-DU, and the second communication node is a gNB-CU.

In an embodiment, the first information is sent to the second communication node at a granularity of base station or cell. The first information indicates the capability of the first communication node of performing the QoS handling based on the packet set.

In an embodiment, the first information is sent to the second communication node. The first information indicates the capability of the first communication node of performing the QoS handling based on the packet set. The capability includes at least one of
a capability of handling a PSDB based on a PDU
a capability of handling a PSER based on a PDU; or
a capability of packet discarding based on a PDU.

It should be noted that those skilled in the art will understand that the methods provided in the embodiments of the present disclosure can be executed alone or together with some methods in the embodiments of the present disclosure or some methods in related arts.

As shown in Fig. 4, an embodiment of the present disclosure provides an information indication method. The method is performed by a first communication node, and the method includes the following step.
Step 41, first information is sent to a second communication node via a UE-associated signaling procedure,
where the first information indicates a capability of the first communication node of performing QoS handling based on a packet set.

In an embodiment, in response to completing a cell handover, the first communication node sends the first information to the second communication node via a path conversion request message. The first information indicates the capability of the first communication node of performing the QoS handling based on the packet set. The first communication node is an access network device, and the second communication node is a core network device.

For example, in response to completing a cell handover, a target base station sends the first information to a base station via a path conversion request message, where the first information indicates a capability of the target base station of performing QoS handling based on a packet set.

For example, when an XR service is handed over from a base station that does not support the PDU Set QoS handling to a base station that supports the PDU Set QoS handling, the new base station may send the PDU Set QoS handling capability to a core network device. At this time, the core network device will continue to perform the above PDU Set QoS handling function.

In an embodiment, in response to completing a connection establishment, the first communication node sends the first information to the second communication node via an initial UE message. The first information indicates the capability of the first communication node of performing the QoS handling based on the packet set. The first communication node is an access network device, and the second communication node is a core network device.

In an embodiment, in response to completing a connection establishment, a base station accessed by a terminal sends the first information to a core network device via an initial UE message. The first information indicates a capability of the base station of performing QoS handling based on a packet set.

In an embodiment, after a handover or connection establishment procedure is completed, the first information is sent to the second communication node at a granularity of terminal, PDU session, or QoS flow.

In an embodiment, in response to performing an NG-based handover, the first communication node sends the first information to the second communication node via a handover failure message or a handover request response message. The first information indicates the capability of the first communication node of performing the QoS handling based on the packet set. The first communication node is an access network device, and the second communication node is a core network device.

In an embodiment, for an NR system, during an NG-based handover, a base station may send base station access layer capability information to a core network device via a HANDOVER FAILURE or a handover request response message, where the base station access layer capability information includes the first information, and the first information indicates a capability of the base station of performing QoS handling based on a packet set.

In an embodiment, in response to performing an Xn-based handover, the first communication node sends the first information to the second communication node via a handover failure message or a handover request response message. The first information indicates the capability of the first communication node of performing the QoS handling based on the packet set. The first communication node is an access network device, and the second communication node is an access network device.

In an embodiment, for an NR system, during an Xn-based handover, a target base station may notify a source base station of its access layer capability information via a HANDOVER FAILURE or a handover request response message, where the base station access layer capability information includes the first information, and the first information indicates a capability of the base station of performing QoS handling based on a packet set.

For example, the HANDOVER FAILURE message is expanded, which may be adding a cause value, for example, the cause value indicates that the PDU Set QoS handling is not supported or is not allowed.

In an embodiment, during a handover ofNG or Xn, the first information is sent to the second communication node at the granularity of terminal, PDU session, or QoS flow. The first information indicates the capability of the first communication node of performing the QoS handling based on the packet set.

It should be noted that those skilled in the art will understand that the methods provided in the embodiments of the present disclosure can be executed alone or together with some methods in the embodiments of the present disclosure or some methods in related arts.

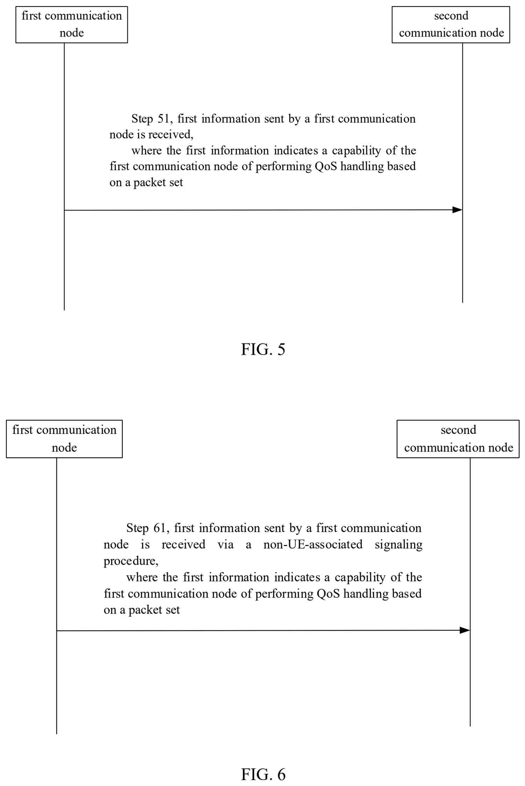

As shown in Fig. 5, an embodiment of the present disclosure provides an information indication method. The method is performed by a second communication node, and the method includes the following step.
Step 51, first information sent by a first communication node is received,
where the first information indicates a capability of the first communication node of performing QoS handling based on a packet set.

The first communication node and/or the second communication node in the present disclosure may be a terminal, an access network device, or a core network device.

The terminal involved in the present disclosure may be, but is not limited to, a mobile phone, a wearable device, a vehicle-mounted terminal, an RSU, a smart home terminal, an industrial sensing device, and/or a medical device, etc. In some embodiments, the terminal may be a Redcap terminal or a NR terminal of a predetermined release (e.g., an R17 NR terminal), which is not limited in the present disclosure.

The access network device involved in the present disclosure may be a base station, and the base station may be a base station in fifth-generation mobile communication technology or other evolved base stations, which is not limited in the present disclosure.

In an embodiment, the packet set may include a PDU set or a protocol data unit (PDU) set. In some scenarios, the terms "packet data unit set" and "protocol data unit set" in the present disclosure may be used interchangeably.

The core network device involved in the present disclosure may be an NF.

In an implementation, there exists one of the following cases:
the first communication node is an access network device, and the second communication node is an access network device;
the first communication node is an access network device, and the second communication node is a core network device;
the first communication node is a gNB-CU, and the second communication node is a gNB-DU;
the first communication node is a terminal, and the second communication node is an access network device;
the first communication node is a terminal, and the second communication node is a core network device; or
the first communication node is a first core network device, and the second communication node is a second core network device.

For example, the core network device may be an AMF, a UPF, or an SMF.

It should be noted that the above combinations of communication nodes are mainly based on the realization of information exchange between different communication nodes and specific implementation examples. In addition to the above combinations, other combinations may appear as the network evolves, which is not limited here.

In an embodiment, the capability of the QoS handling based on the packet set may be a capability possessed by the first communication node, and the capability may or may not be activated. In an embodiment, the first communication node may enable or activate the capability, and the capability may be an enabled or activated capability.

In an embodiment, the first communication node is a first access network device, and the second communication node is a second access network device. The second access network device receives the first information sent by the first access network device, where the first information indicates a capability of the first access network device of performing QoS handling based on a packet set.

In an embodiment, the first communication node is an access network device, and the second communication node is a core network device. The core network device receives the first information sent by the access network device, where the first information indicates a capability of the access network device of performing QoS handling based on a packet set.

In an embodiment, the first communication node is a gNB-CU, and the second communication node is a gNB-DU. The gNB-DU receives the first information sent by the gNB-CU, where the first information indicates a capability of the gNB-CU of performing QoS handling based on a packet set.

In an embodiment, the first communication node is a terminal, and the second communication node is an access network device. The access network device receives the first information sent by the terminal, where the first information indicates a capability of the terminal of performing QoS handling based on a packet set.

In an embodiment, the first communication node is a terminal, and the second communication node is a core network device. The core network device receives the first information sent by the terminal, where the first information indicates a capability of the terminal of performing QoS handling based on a packet set.

In an embodiment, the first information sent by the first communication node is received via a non-UE-associated signaling procedure, where the first information indicates the capability of the first communication node of performing the QoS handling based on the packet set.

In an embodiment, in response to an NG interface establishment, the first information sent by the first communication node to the second communication node via an NG interface establishment request message is received. The first information indicates the capability of the first communication node of performing the QoS handling based on the packet set. The first communication node is an access network device, and the second communication node is a core network device.

For example, in an NR system, when an NG interface is established, base station access layer capability information, which is sent by a base station to a core network device via an NG SETUP REQUEST message, is received, where the base station access layer capability information includes the first information, and the first information indicates a capability of the base station of performing QoS handling based on a packet set.

In an embodiment, in response to an NG interface update, the first information sent by the first communication node to the second communication node via a radio access network configuration update message is received. The first information indicates the capability of the first communication node of performing the QoS handling based on the packet set. The first communication node is an access network device, and the second communication node is a core network device.

For example, in an NR system, when an NG interface is updated, base station access layer capability information, which is sent by a base station to a core network device via an RAN CONFIGURATION UPDATE message, is received, where the base station access layer capability information includes the first information, and the first information indicates a capability of the base station of performing QoS handling based on a packet set.

Thus, an SMF does not need to send a PDU Set QoS parameter to the base station, and a UPF does not need to identify PDUs belonging to the PDU set and send them to an NG-RAN in a GTP-U header.

In an embodiment, in response to an Xn interface establishment, the first information, which is sent by the first communication node to the second communication node via an Xn interface establishment request message or an Xn establishment response message, is received. The first information indicates the capability of the first communication node of performing the QoS handling based on the packet set. The first communication node is an access network device, and the second communication node is an access network device adjacent to the first communication node.

For example, in an NR system, when an XN interface is established, base station access layer capability information, which is sent by a base station to a neighboring base station via an XN SETUP REQUEST message or an XN SETUP RESPONSE message, is received, where the base station access layer capability information includes the first information, and the first information indicates a capability of the base station of performing QoS handling based on a packet set.

In an embodiment, in response to an Xn interface update, the first information, which is sent by the first communication node to the second communication node via a radio access network node configuration update message or a radio access network node configuration update feedback message, is received. The first information indicates the capability of the first communication node of performing the QoS handling based on the packet set. The first communication node is an access network device, and the second communication node is an access network device adjacent to the first communication node.

For example, in an NR system, when an Xn interface is updated, base station access layer capability information, which is sent by a base station to a neighboring base stations via an NG-RAN NODE CONFIGURATION UPDATE message or an NG-RAN NODE CONFIGURATION UPDATE ACKNOWLEDGE message, is received, where the base station access layer capability information includes the first information, and the first information indicates a capability of the base station of performing QoS handling based on a packet set.

Therefore, when handing over of the XR service, the base station that supports the PDU Set QoS handling may be selected as much as possible during the handover.

In an embodiment, in response to an F1AP interface establishment, the first information, which is sent by the first communication node to the second communication node via an F1AP interface establishment request message, is received. The first information indicates the capability of the first communication node of performing the QoS handling based on the packet set. The first communication node is a gNB-DU, and the second communication node is a gNB-CU.

For example, in an NR system, when an F1AP interface is established, gNB-DU access layer capability information, which is sent by a gNB-DU to a gNB-CU via an F1 SETUP REQUEST message, is received, where the gNB-DU access layer capability information includes the first information, and the first information indicates a capability of the gNB-DU of performing QoS handling based on a packet set.

In an embodiment, in response to an F1AP interface update, the first information, which is sent by the first communication node to the second communication node via a base station distribution unit configuration update message, is received. The first information indicates the capability of the first communication node of performing the QoS handling based on the packet set. The first communication node is a gNB-DU, and the second communication node is a gNB-CU.

For example, in an NR system, when an F1AP interface is updated, gNB-DU access layer capability information, which is sent by a gNB-DU to a gNB-CU via a GNB-DU CONFIGURATION UPDATE message, where the gNB-DU access layer capability information includes the first information, and the first information indicates a capability of the gNB-DU of performing QoS handling based on a packet set.

In an embodiment, the first information sent by the first communication node is received at a granularity of base station or cell. The first information indicates the capability of the first communication node of performing the QoS handling based on the packet set.

In an embodiment, the first information sent by the first communication node is received, where the first information indicates the capability of the first communication node of performing the QoS handling based on the packet set. The capability includes at least one of:
a capability of handling a PSDB based on a PDU;
a capability of handling a PSER based on a PDU; or
a capability of packet discarding based on a PDU.

For example, if a target base station does not support packet set-based packet discarding, an original base station does not need to send assistance information indicating the packet set-based packet discarding.

In an embodiment, the first information is sent to the second communication node via a UE-associated signaling procedure, where the first information indicates the capability of the first communication node of performing the QoS handling based on the packet set.

In an embodiment, in response to completing a cell handover, the first information, which is sent by the first communication node to the second communication node via a path conversion request message, is received. The first information indicates the capability of the first communication node of performing the QoS handling based on the packet set. The first communication node is an access network device, and the second communication node is a core network device.

For example, in response to completing a cell handover, the first information, which is sent by a target base station to a base station via a path conversion request message, is received, where the first information indicates a capability of the target base station of performing QoS handling based on a packet set.

For example, when an XR service is handed over from a base station that does not support the PDU Set QoS handling to a base station that supports the PDU Set QoS handling, the new base station may send the PDU Set QoS handling capability to a core network device. At this time, the core network device will continue to perform the above PDU Set QoS handling function.

In an embodiment, in response to completing a connection establishment, the first information, which is sent by the first communication node to the second communication node via an initial UE message, is received. The first information indicates the capability of the first communication node of performing the QoS handling based on the packet set. The first communication node is an access network device, and the second communication node is a core network device.

In an embodiment, in response to completing a connection establishment, the first information, which is sent by a base station accessed by a terminal to a core network device via an initial UE message, is received. The first information indicates a capability of the base station of performing QoS handling based on a packet set.

In an embodiment, after a handover or connection establishment procedure is completed, the first information sent by the first communication node is received at a granularity of terminal, PDU session, or QoS flow.

In an embodiment, in response to performing an NG-based handover, the first information, which is sent by the first communication node to the second communication node via a handover failure message or a handover request response message, is received. The first information indicates the capability of the first communication node of performing the QoS handling based on the packet set. The first communication node is an access network device, and the second communication node is a core network device.

In an embodiment, for an NR system, during an NG-based handover, base station access layer capability information, which is sent by a base station to a core network device via a HANDOVER FAILURE or a handover request response message, is received, where the base station access layer capability information includes the first information, and the first information indicates a capability of the base station of performing QoS handling based on a packet set.

In an embodiment, in response to performing an Xn-based handover, the first information, which is sent by the first communication node to the second communication node via a handover failure message or a handover request response message, is received. The first information indicates the capability of the first communication node of performing the QoS handling based on the packet set. The first communication node is an access network device, and the second communication node is an access network device.

In an embodiment, for an NR system, during an Xn-based handover, access layer capability information, which is sent by a target base station to a source base station via a HANDOVER FAILURE or a handover request response message, is received, where the base station access layer capability information includes the first information, and the first information indicates a capability of the base station of performing QoS handling based on a packet set.

For example, the HANDOVER FAILURE message is expanded, which may be adding a cause value, for example, the cause value indicates that the PDU Set QoS handling is not supported or is not allowed.

In an embodiment, during a handover of NG or Xn, the first information sent by the first communication node is received at the granularity of terminal, PDU session, or QoS flow. The first information indicates the capability of the first communication node of performing the QoS handling based on the packet set.

In an embodiment, the first information sent by the first communication node via an attach request message is received, where the first information indicates the capability of the first communication node of performing the QoS handling based on the packet set. The first communication node is a terminal, and the second communication node is a core network device. Here, the granularity of receiving the first information sent by the first communication node may be per terminal, per PDU session, or per QoS flow. Here, the attach request message may be a request message sent in an attach procedure of establishing a terminal context. The attach request message may be an NAS signaling message, which may be carried by RRCConnectionSETupComplete (a last message for establishing an RRC connection).

In an embodiment, the first information sent by the first communication node via a register request message is received, where the first information indicates the capability of the first communication node of performing the QoS handling based on the packet set. The first communication node is a terminal, and the second communication node is a core network device. Here, the granularity of receiving the first information sent by the first communication node may be per terminal, per PDU session, or per QoS flow. Here, the register request message may be a message sent in the process of the terminal registering with the network, and the register request message is used to request the completion of the terminal's registration in the network.

In an embodiment, the first communication node is a terminal, and the second communication node is a base station. The terminal sends the first information to the base station. In response to the base station determining, based on the capability, that the terminal supports the packet discarding based on a PDU, the base station configures an uplink parameter of the packet discarding based on the PDU and/or a parameter of packet discarding based on PSI in a congestion condition. Here, the first information sent by the terminal may be received at the granularity of terminal or DRB, and the first information indicates the capability of the first communication node of performing the QoS handling based on the packet set. It should be noted that, in some scenarios, the rules in the terminal and the access network may include mapping a QoS flow to a DRB, and the first information may be sent to the base station at the granularity of DRB.

In an embodiment, the terminal reports the first information to the core network via an attach request/register request. Then, the core network informs the base station that the terminal does not support uplink packet set-based packet discarding. In this case, the base station may not configure a PSI-based discard timer for the terminal. Here, the first information sent by the terminal may be received at the granularity of terminal, PDU session, or QoS flow, and the first information indicates the capability of the first communication node of performing the QoS handling based on the packet set.

It should be noted that those skilled in the art will understand that the methods provided in the embodiments of the present disclosure can be executed alone or together with some methods in the embodiments of the present disclosure or some methods in related arts.

As shown in Fig. 6, an embodiment of the present disclosure provides an information indication method. The method is performed by a second communication node, and the method includes the following step.
Step 61, first information sent by a first communication node is received via a non-UE-associated signaling procedure;
where the first information indicates a capability of the first communication node of performing QoS handling based on a packet set.

In an embodiment, in response to an NG interface establishment, the first information sent by the first communication node to the second communication node via an NG interface establishment request message is received. The first information indicates the capability of the first communication node of performing the QoS handling based on the packet set. The first communication node is an access network device, and the second communication node is a core network device.

For example, in an NR system, when an NG interface is established, base station access layer capability information, which is sent by a base station to a core network device via an NG SETUP REQUEST message, is received, where the base station access layer capability information includes the first information, and the first information indicates a capability of the base station of performing QoS handling based on a packet set.

In an embodiment, in response to an NG interface update, the first information sent by the first communication node to the second communication node via a radio access network configuration update message is received. The first information indicates the capability of the first communication node of performing the QoS handling based on the packet set. The first communication node is an access network device, and the second communication node is a core network device.

For example, in an NR system, when an NG interface is updated, base station access layer capability information, which is sent by a base station to a core network device via an RAN CONFIGURATION UPDATE message, is received, where the base station access layer capability information includes the first information, and the first information indicates a capability of the base station of performing QoS handling based on a packet set.

Thus, an SMF does not need to send a PDU Set QoS parameter to the base station, and a UPF does not need to identify PDUs belonging to the PDU set and send them to an NG-RAN in a GTP-U header.

In an embodiment, in response to an Xn interface establishment, the first information, which is sent by the first communication node to the second communication node via an Xn interface establishment request message or an Xn establishment response message, is received. The first information indicates the capability of the first communication node of performing the QoS handling based on the packet set. The first communication node is an access network device, and the second communication node is an access network device adjacent to the first communication node.

For example, in an NR system, when an XN interface is established, base station access layer capability information, which is sent by a base station to a neighboring base station via an XN SETUP REQUEST message or an XN SETUP RESPONSE message, is received, where the base station access layer capability information includes the first information, and the first information indicates a capability of the base station of performing QoS handling based on a packet set.

In an embodiment, in response to an Xn interface update, the first information, which is sent by the first communication node to the second communication node via a radio access network node configuration update message or a radio access network node configuration update feedback message, is received. The first information indicates the capability of the first communication node of performing the QoS handling based on the packet set. The first communication node is an access network device, and the second communication node is an access network device adjacent to the first communication node.

For example, in an NR system, when an Xn interface is updated, base station access layer capability information, which is sent by a base station to a neighboring base stations via an NG-RAN NODE CONFIGURATION UPDATE message or an NG-RAN NODE CONFIGURATION UPDATE ACKNOWLEDGE message, is received, where the base station access layer capability information includes the first information, and the first information indicates a capability of the base station of performing QoS handling based on a packet set.

Therefore, when handing over of the XR service, the base station that supports the PDU Set QoS handling may be selected as much as possible during the handover.

In an embodiment, in response to an F1AP interface establishment, the first information, which is sent by the first communication node to the second communication node via an F1AP interface establishment request message, is received. The first information indicates the capability of the first communication node of performing the QoS handling based on the packet set. The first communication node is a gNB-DU, and the second communication node is a gNB-CU.

For example, in an NR system, when an F1AP interface is established, gNB-DU access layer capability information, which is sent by a gNB-DU to a gNB-CU via an F1 SETUP REQUEST message, is received, where the gNB-DU access layer capability information includes the first information, and the first information indicates a capability of the gNB-DU of performing QoS handling based on a packet set.

In an embodiment, in response to an F1AP interface update, the first information, which is sent by the first communication node to the second communication node via a base station distribution unit configuration update message, is received. The first information indicates the capability of the first communication node of performing the QoS handling based on the packet set. The first communication node is a gNB-DU, and the second communication node is a gNB-CU.

For example, in an NR system, when an F1AP interface is updated, gNB-DU access layer capability information, which is sent by a gNB-DU to a gNB-CU via a GNB-DU CONFIGURATION UPDATE message, where the gNB-DU access layer capability information includes the first information, and the first information indicates a capability of the gNB-DU of performing QoS handling based on a packet set.

In an embodiment, the first information sent by the first communication node is received at a granularity of base station or cell. The first information indicates the capability of the first communication node of performing the QoS handling based on the packet set.

In an embodiment, the first information sent by the first communication node is received, where the first information indicates the capability of the first communication node of performing the QoS handling based on the packet set. The capability includes at least one of:
a capability of handling a PSDB based on a PDU;
a capability of handling a PSER based on a PDU; or
a capability of packet discarding based on a PDU.

It should be noted that those skilled in the art will understand that the methods provided in the embodiments of the present disclosure can be executed alone or together with some methods in the embodiments of the present disclosure or some methods in related arts.

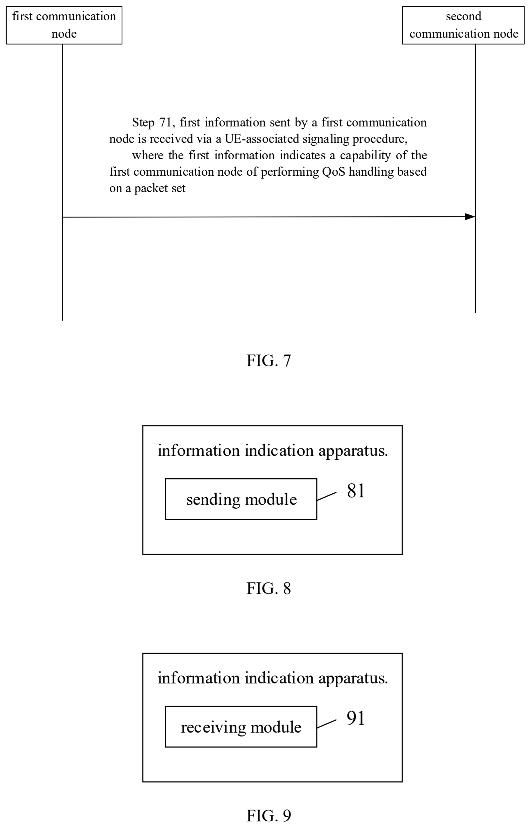

As shown in Fig. 7, an embodiment of the present disclosure provides an information indication method. The method is performed by a second communication node, and the method includes the following step.
Step 71, first information sent by a first communication node is received via a UE-associated signaling procedure,
where the first information indicates a capability of the first communication node of performing QoS handling based on a packet set.

In an embodiment, in response to completing a cell handover, the first information, which is sent by the first communication node to the second communication node via a path conversion request message, is received. The first information indicates the capability of the first communication node of performing the QoS handling based on the packet set. The first communication node is an access network device, and the second communication node is a core network device.

For example, in response to completing a cell handover, the first information, which is sent by a target base station to a base station via a path conversion request message, is received, where the first information indicates a capability of the target base station of performing QoS handling based on a packet set.

For example, when an XR service is handed over from a base station that does not support the PDU Set QoS handling to a base station that supports the PDU Set QoS handling, the new base station may send the PDU Set QoS handling capability to a core network device. At this time, the core network device will continue to perform the above PDU Set QoS handling function.

In an embodiment, in response to completing a connection establishment, the first information, which is sent by the first communication node to the second communication node via an initial UE message, is received. The first information indicates the capability of the first communication node of performing the QoS handling based on the packet set. The first communication node is an access network device, and the second communication node is a core network device.

In an embodiment, in response to completing a connection establishment, the first information, which is sent by a base station accessed by a terminal to a core network device via an initial UE message, is received. The first information indicates a capability of the base station of performing QoS handling based on a packet set.

In an embodiment, after a handover or connection establishment procedure is completed, the first information sent by the first communication node is received at a granularity of terminal, PDU session, or QoS flow.

In an embodiment, in response to performing an NG-based handover, the first information, which is sent by the first communication node to the second communication node via a handover failure message or a handover request response message, is received. The first information indicates the capability of the first communication node of performing the QoS handling based on the packet set. The first communication node is an access network device, and the second communication node is a core network device.

In an embodiment, for an NR system, during an NG-based handover, base station access layer capability information, which is sent by a base station to a core network device via a HANDOVER FAILURE or a handover request response message, is received, where the base station access layer capability information includes the first information, and the first information indicates a capability of the base station of performing QoS handling based on a packet set.

In an embodiment, in response to performing an Xn-based handover, the first information, which is sent by the first communication node to the second communication node via a handover failure message or a handover request response message, is received. The first information indicates the capability of the first communication node of performing the QoS handling based on the packet set. The first communication node is an access network device, and the second communication node is an access network device.

In an embodiment, for an NR system, during an Xn-based handover, access layer capability information, which is sent by a target base station to a source base station via a HANDOVER FAILURE or a handover request response message, is received, where the base station access layer capability information includes the first information, and the first information indicates a capability of the base station of performing QoS handling based on a packet set.

For example, the HANDOVER FAILURE message is expanded, which may be adding a cause value, for example, the cause value indicates that the PDU Set QoS handling is not supported or is not allowed.

In an embodiment, during a handover of NG or Xn, the first information sent by the first communication node is received at the granularity of terminal, PDU session, or QoS flow. The first information indicates the capability of the first communication node of performing the QoS handling based on the packet set.

It should be noted that those skilled in the art will understand that the methods provided in the embodiments of the present disclosure can be executed alone or together with some methods in the embodiments of the present disclosure or some methods in related arts.

To better understand the embodiments of the present disclosure, the technical solutions of the present disclosure are further described below through example embodiments:
In an embodiment, the present disclosure protects a negotiation mechanism for exchanging capability information between network element nodes for specific Quality of Service (QoS) handling, the examples are as follows:
a) the interaction nodes may base stations;
b) the interaction nodes may be a base station and a core network;
c) the interaction nodes may be a gNB-CU and a gNB-DU;
d) the interaction nodes may be a terminal and a base station;
e) the interaction nodes may be a terminal and a core network; or
f) the interaction nodes may be core network elements, where the core network element includes one of: an AMF, a UPF, or an SMF;
g) where specific QoS handling may be a packet set based QoS handling mechanism.

In an embodiment, the packet set based QoS handling mechanism may include at least one of:
1) packet set based packet identification, that is, identifying a relationship between packets, such as which packets belong to the same packet set;
2) packet set based PSDB or PSER handling capability; or
3) packet set based packet discarding, i.e., a data sender performs the packet set based packet discarding according to a PSIHI indication. If the PSIHI is set to "1", then if one packet in the packet set is not successfully delivered, the entire packet set needs to be discarded.

For example, if a target base station does not support packet set based packet discarding, an original base station does not need to send assistance information to the target base station for the packet set based packet discarding.

The exchange of capability information between network element nodes is interacting between the network elements on whether they have the capability of packet set based QoS handling mechanism.

The capability of packet set based QoS handling mechanism may be that a network element has the capability (which may be active or inactive), or that the network element has already enabled or activated the capability.

A granularity of capability information interaction may be per UE, per DRB, per PDU session, or per QoS flow; which respectively means that:
for a UE, the first communication node notifies the second communication node that it has the capability of the QoS handling based on the packet set or has activated the capability of the QoS handling based on packet set;
for a DRB, the first communication node notifies the second communication node that it has the capability of the QoS handling based on the packet set or has activated the capability of the QoS handling based on the packet set;
for a PDU session, the first communication node notifies the second communication node that it has the capability of the QoS handling based on the packet set or has activated the capability of the QoS handling capability based on the packet set;
for a QoS flow, the first communication node notifies the second communication node that it has the capability of the QoS handling based on the packet set or has activated the capability of the QoS handling capability based on the packet set.

Therefore, the exchange of this type of information between the network elements helps with the packet set based QoS handling during the communication.

In an embodiment, nodes negotiate a base station capability via a non-UE-associated signaling procedure:
a) as an example: for an NR system, when an NG interface is established or updated, a base station may notify base station access layer capability information to a core network via an NG SETUP REQUEST message or an RAN CONFIGURATION UPDATE message;
   the advantage of this scheme is that an SMF does not need to send PDU Set QoS Parameters to the base station, and a UPF does not need to identify PDUs that belong to the PDU Sets and send them to the NG-RAN in the GTP-U header.
b) as an example: for an NR system, when an interface between base stations is established or updated, a base station may notify a neighboring base station of access layer capability information via an XN SETUP REQUEST message, an XN SETUP RESPONSE message, an NG-RAN NODE CONFIGURATION UPDATE message, or an NG-RAN NODE CONFIGURATION UPDATE ACKNOWLEDGE message;
   the advantage of this scheme is that, during a handover for XR services, a base station that supports the PDU Set QoS should be selected as much as possible;
c) as an example: for an NR system, in a CU-DU division architecture, when an F1AP interface is established or updated, for the NR system, when the NG interface is established, the gNB-DU may notify the gNB-CU of access layer capability information via an F1 SETUP REQUEST message, or a GNB-DU CONFIGURATION UPDATE message;
d) a granularity of negotiation between network elements may be either per base station or per cell.

In an embodiment, nodes negotiate capability interaction between a base station and a core network through a UE-associated signaling procedure:
a) as an example: after a handover is completed, a path conversion request message that a target base station notifies a core network carries the base station's support capability for the PDU Set QoS;
   for example, when switching an XR service from a base station that does not support the PDU Set QoS handling to a base station that supports the PDU Set QoS handling, the new base station may notify the core network of its PDU Set QoS handling capability. In this case, the core network will continue to perform the above PDU Set QoS handling function;
b) as an example: after the connection is established, an initial UE message that is sent by a base station accessed by a terminal to a core network carries the base station's support capability for the PDU Set QoS;
c) a granularity of negotiation between the network elements may be per UE, per PDU session, or per QoS flow.

In an embodiment, nodes negotiate capability interaction between base stations via a UE-associated signaling procedure:
a) as an example: for an NR system, during a NG-based handover, a base station may notify a core network of base station access layer capability information via a HANDOVER FAILURE/Handover Request Response message;
b) as an example: for an NR system, during an Xn-based handover, a target base station may notify a source base station of access layer capability information via a HANDOVER FAILURE/Handover Request Response message;
   specifically, the HANDOVER FAILURE message is expanded by adding a cause value, for example, the cause value indicates that the PDU Set QoS handling is not supported or is not allowed;
c) a granularity of negotiation between network elements may be per UE, per PDU session, or per QoS flow.

In an embodiment, there is capability interaction between a terminal and a core network;
d) as one example: in an attach request/register request, the terminal may notify the core network whether it supports the PDU Set QoS handling;
e) a granularity of negotiation between network elements may be per UE, per PDU session, or per QoS flow;

In an embodiment, there is capability interaction between a terminal and a base station;
a) as an example: the terminal reports its uplink packet set-based handling capability to the base station via its terminal capability report.

As an example, an embodiment of uplink packet set-based handling capability is packet set-based packet discarding. In this case, the base station may enable or configure parameters of the uplink packet set-based packet discarding for the terminal, such as configuring a PSI-based discard timer.

As an example, an embodiment of the uplink packet set-based handling capability is PSI-based packet discarding in a congestion situation, in which case the base station may enable or configure parameters of the uplink PSI-based packet discarding for the terminal.

b) as an example: the terminal reports to a core network via an attach request/register request, and then the core network informs the base station that the terminal does not support uplink packet set-based packet discarding. In this case, the base station may not configure a PSI-based discard timer for the terminal.

A granularity of negotiation between the terminal and the base station may be per UE, per DRB, per PDU session, or per QoS flow.

As shown in Fig. 8, an embodiment of the present disclosure provides an information indication apparatus. The apparatus includes:
a sending module 81, configured to send first information to a second communication node,
where the first information indicates a capability of a first communication node of performing QoS handling based on a packet set.

It should be noted that those skilled in the art will understand that the methods provided in the embodiments of the present disclosure can be executed alone or together with some methods in the embodiments of the present disclosure or some methods in related arts.

As shown in Fig. 9, an embodiment of the present disclosure provides an information indication apparatus. The apparatus includes:
a receiving module 91, configured to receive first information sent by a first communication node,
where the first information indicates a capability of a first communication node of performing QoS handling based on a packet set.

It should be noted that those skilled in the art will understand that the methods provided in the embodiments of the present disclosure can be executed alone or together with some methods in the embodiments of the present disclosure or some methods in related arts.

The present disclosure provides an information indication system, which includes a first communication node and a second communication node. The first communication node is configured to execute any of the methods executed by the first communication node in the present disclosure, and the second communication node is configured to execute any of the methods executed by the second communication node in the present disclosure.

The present disclosure provides a communication device. The device includes:
a processor; and
a memory configured to store instructions executable by the processor,
where the processor is configured to implement, when running executable instructions, the methods applicable to any embodiment of the present disclosure.

The processor may include various types of storage media, which are non-transitory computer storage media that can continue to store information after the communication device loses power.

The processor may connect to the memory via a bus or other means to read executable programs stored in the memory.

The present disclosure also provides a computer storage medium storing a computer-executable program that, when executed by a processor, implements the method of any embodiment of the present disclosure.

Regarding the apparatuses in the above embodiments, the specific manner in which each module performs its operation has been described in detail in the embodiments related to the methods, and will not be described in detail here.

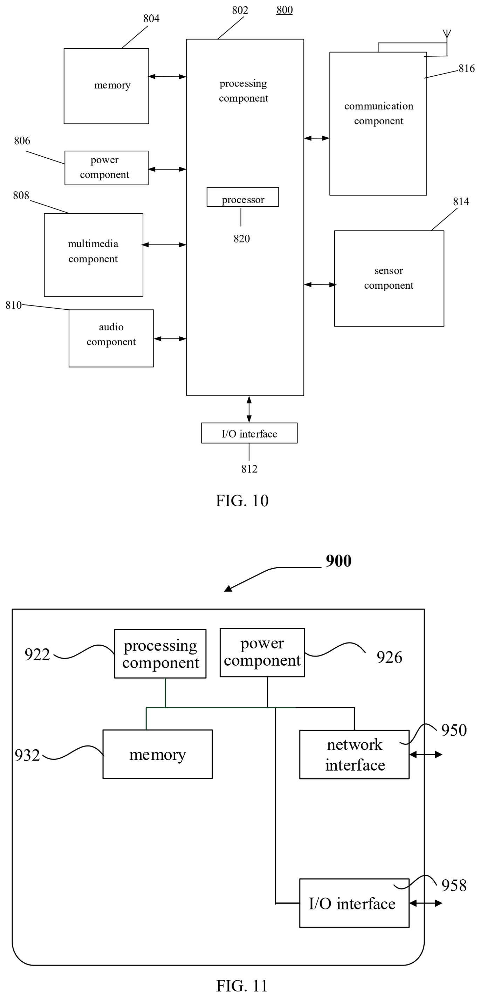

As shown in Fig. 10, an embodiment of the present disclosure provides a structure of a terminal.

Referring to the terminal 800 shown in Fig. 10, the embodiment provides a terminal 800, which may specifically be a mobile phone, a computer, a digital broadcasting terminal, a messaging device, a game console, a tablet device, a medical device, a fitness device, a personal digital assistant, etc.

Referring to Fig. 10, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operation of terminal 800, such as operations associated with display, telephone calls, data communication, camera operation, and recording operation. The processing component 802 may include one or more processors 820 to execute instructions to perform all or part of the steps of the methods described above. In addition, the processing component 802 may include one or more modules to facilitate the interaction between the processing component 802 and other components. For example, the processing component 802 may include a multimedia module to facilitate interaction between the multimedia component 808 and the processing component 802.

The memory 804 is configured to store various types of data to support the operation of the terminal 800. Examples of the data include instructions for any application or method operating on the terminal 800, contact data, phonebook data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk, or an optical disk.

The power component 806 provides power to the various components of the terminal 800. The power component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touchscreen to receive input signals from the user. The touch panel includes one or more touch sensors to sense touches, swipes, and gestures on the touch panel. Touch sensors may not only sense the boundaries of touch or swipe actions, but also detect the duration and pressure associated with the touch or swipe operation. In some embodiments, the multimedia component 808 includes a front-facing camera and/or a rear-facing camera. When the terminal 800 is in an operating mode, such as shooting mode or video mode, the front camera and/or rear camera may receive external multimedia data. Each front-facing and rear-facing camera may be a fixed optical lens system or have focal length and optical zoom capabilities.

The audio component 810 is configured to output and/or input audio signals. For example, the audio component 810 includes a microphone (MIC) that is configured to receive external audio signals when the terminal 800 is in an operating mode, such as call mode, recording mode, and voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, a click wheel, a button, etc. The buttons may include, but is not limited to: a home button, a volume button, a start button, and a lock button.

The sensor component 814 includes one or more sensors for providing various aspects of status assessment for the terminal 800. For example, the sensor component 814 may detect the on/off state of the terminal 800, the relative positioning of components, such as the display and keypad of the terminal 800. The sensor component 814 may also detect changes in the position of the terminal 800 or a component of the terminal 800, the presence or absence of user contact with the terminal 800, the orientation or acceleration/deceleration of the terminal 800, and temperature changes of the terminal 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer, a gyroscope, a magnetometer, a pressure sensor, or a temperature sensor.

The communication component 816 is configured to facilitate wired or wireless communication between the terminal 800 and other devices. The terminal 800 may access wireless networks based on communication standards, such as Wi-Fi, 2G or 3G, or a combination thereof. In an example embodiment, the communication component 816 receives broadcast signals or broadcast-related information from an external broadcast management system via a broadcast channel. In an example embodiment, the communication component 816 further includes a near field communication (NFC) module to facilitate short-range communication. For example, the NFC module may be implemented based on radio frequency identification (RFID) technology, Infrared Data Association (IrDA) technology, ultra-wideband (UWB) technology, Bluetooth (BT) technology, and other technologies.

In an example embodiment, the terminal 800 may be implemented by one or more application-specific integrated circuits (ASICs), digital signal processors (DSPs), digital signal handling devices (DSPDs), programmable logic devices (PLDs), field-programmable gate arrays (FPGAs), controllers, microcontrollers, microprocessors, or other electronic components to perform the methods described above.

In an example embodiment, there is also provided a non-transitory computer-readable storage medium including instructions, such as a memory 804 including instructions, which may be executed by a processor 820 of a terminal 800 to perform the above methods. For example, the non-transitory computer-readable storage media may be a ROM, a random access memory (RAM), a CD-ROM, a magnetic tape, a floppy disk, and an optical data storage device.

As shown in Fig. 11, an embodiment of the present disclosure illustrates a structure of a base station. For example, the base station 900 may be provided as a network-side device. Referring to Fig. 11, the base station 900 includes a processing component 922, which further includes one or more processors, and memory resources represented by a memory 932 for storing instructions, such as applications, that may be executed by the processing component 922. The application program stored in the memory 932 may include one or more modules, each corresponding to a set of instructions. Furthermore, the processing component 922 is configured to execute instructions to perform any of the methods described above applied to the base station.

The base station 900 may also include a power component 926 configured to perform power management of the base station 900, a wired or wireless network interface 950 configured to connect the base station 900 to a network, and an input/output (I/O) interface 958. The base station 900 may operate on an operating system stored in the memory 932, such as Windows Server^{™}, Mac OS X^{™}, Unix^{™}, Linux^{™}, FreeBSD^{™}, or similar.

Other embodiments of the invention will readily occur to those skilled in the art upon consideration of the specification and practice of the present disclosure. The present disclosure is intended to cover any variations, uses, or adaptations of the embodiments that follow the general principles of the present disclosure and include common knowledge or customary techniques in the art that are not disclosed herein. The description and examples are to be considered exemplary only, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

## Claims

1. An information indication method, performed by a first communication node, comprising:
sending first information to a second communication node,
wherein the first information indicates a capability of the first communication node of performing quality of service (QoS) handling based on a packet set.

2. The method according to claim 1, wherein sending the first information to the second communication node comprises:
sending the first information to the second communication node via a non-user equipment-associated (non-UE-associated) signaling procedure.

3. The method according to claim 2, wherein sending the first information to the second communication node via the non-UE-associated signaling procedure comprises one of:
in response to a next generation (NG) interface establishment, sending, by the first communication node, the first information to the second communication node via an NG interface establishment request message, wherein the first communication node is an access network device and the second communication node is a core network device;
in response to an NG interface update, sending, by the first communication node, the first information to the second communication node via a radio access network configuration update message, wherein the first communication node is an access network device and the second communication node is a core network device;
in response to an Xn interface establishment, sending, by the first communication node, the first information to the second communication node via an Xn interface establishment request message or an Xn establishment response message, wherein the first communication node is an access network device, and the second communication node is an access network device adjacent to the first communication node;
in response to an Xn interface update, sending, by the first communication node, the first information to the second communication node via a radio access network node configuration update message or a radio access network node configuration update feedback message, wherein the first communication node is an access network device, and the second communication node is an access network device adjacent to the first communication node;
in response to an F1 application protocol (F1AP) interface establishment, sending, by the first communication node, the first information to the second communication node via an F1AP interface establishment request message, wherein the first communication node is a next generation NodeB distributed unit (gNB-DU) and the second communication node is a gNB central unit (gNB-CU); or
in response to an F1AP interface update, sending, by the first communication node, the first information to the second communication node via a base station distribution unit configuration update message, wherein the first communication node is a gNB-DU and the second communication node is a gNB-CU.

4. The method according to claim 2, wherein sending the first information to the second communication node comprises:
sending the first information to the second communication node at a granularity of base station or cell.

5. The method according to claim 2, wherein the capability comprises at least one of:
a capability of handling a packet data unit (PDU) set delay budget (PSDB) based on a PDU;
a capability of handling a PDU set error rate (PSER) based on a PDU; or
a capability of packet discarding based on a PDU.

6. The method according to claim 1, wherein sending the first information to the second communication node comprises:
sending the first information to the second communication node via a UE-associated signaling procedure.

7. The method according to claim 6, wherein sending the first information to the second communication node via the UE-associated signaling procedure comprises one of:
in response to completing a cell handover, sending, by the first communication node, the first information to the second communication node via a path conversion request message, wherein the first communication node is an access network device and the second communication node is a core network device;
in response to completing a connection establishment, sending, by the first communication node, the first information to the second communication node via an initial UE message, wherein the first communication node is an access network device and the second communication node is a core network device;
in response to performing an NG-based handover, sending, by the first communication node, the first information to the second communication node via a handover failure message or a handover request response message, wherein the first communication node is an access network device and the second communication node is a core network device; or
in response to performing an Xn-based handover, sending, by the first communication node, the first information to the second communication node via a handover failure message or a handover request response message, wherein the first communication node is an access network device and the second communication node is an access network device.

8. The method according to claim 1, wherein sending the first information to the second communication node comprises:
sending the first information to the second communication node via an attach request message; or
sending the first information to the second communication node via a register request message,
wherein the first communication node is a UE, and the second communication node is a core network device.

9. The method according to any one of claims 6 to 8, wherein sending the first information to the second communication node comprises:
sending the first information to the second communication node at a granularity of UE, PDU session, or QoS flow.

10. The method according to claim 1, wherein the first communication node is a UE, the second communication node is a base station, and the method further comprises:
sending the first information to the second communication node at a granularity of UE or data radio bearer (DRB).

11. An information indication method, performed by a second communication node, comprising:
receiving first information sent by a first communication node,
wherein the first information indicates a capability of the first communication node of performing quality of service (QoS) handling based on a packet set.

12. The method according to claim 11, wherein receiving the first information sent by the first communication node comprises:
receiving the first information sent by the first communication node via a non-user equipment-associated (non-UE-associated) signaling procedure.

13. The method according to claim 12, wherein receiving the first information sent by the first communication node via the non-UE-associated signaling process comprises one of:
in response to a next generation (NG) interface establishment, receiving the first information sent by the first communication node via an NG interface establishment request message, wherein the first communication node is an access network device and the second communication node is a core network device;
in response to an NG interface update, receiving the first information sent by the first communication node via a radio access network configuration update message, wherein the first communication node is an access network device and the second communication node is a core network device;
in response to an Xn interface establishment, receiving the first information sent by the first communication node via an Xn interface establishment request message or an Xn establishment response message, wherein the first communication node is an access network device, and the second communication node is an access network device adjacent to the first communication node;
in response to an Xn interface update, receiving the first information sent by the first communication node via a radio access network node configuration update message or a radio access network node configuration update feedback message, wherein the first communication node is an access network device, and the second communication node is an access network device adjacent to the first communication node;
in response to an F1 application protocol (F1AP) interface establishment, receiving the first information sent by the first communication node via an F1AP interface establishment request message, wherein the first communication node is a next generation NodeB distributed unit (gNB-DU) and the second communication node is a gNB central unit (gNB-CU); or
in response to an F1AP interface update, receiving the first information sent by the first communication node via a base station distribution unit configuration update message, wherein the first communication node is a gNB-DU and the second communication node is a gNB-CU.

14. The method according to claim 12, wherein receiving the first information sent by the first communication node comprises:
receiving the first information sent by the first communication node at a granularity of base station or cell.

15. The method of claim 12, wherein the capability comprises at least one of:
a capability of handling a packet data unit (PDU) set delay budget (PSDB) based on a PDU;
a capability of handling a PDU set error rate (PSER) based on a PDU; or
a capability of packet discarding based on a PDU.

16. The method according to claim 11, wherein receiving the first information sent by the first communication node comprises:
receiving the first information sent by the first communication node via a UE-associated signaling procedure.

17. The method according to claim 16, receiving the first information sent by the first communication node via the UE-associated signaling procedure comprises one of:
in response to completing a cell handover, receiving the first information sent by the first communication node via a path conversion request message, wherein the first communication node is an access network device and the second communication node is a core network device;
in response to completing a connection establishment, receiving the first information sent by the first communication node via an initial UE message, wherein the first communication node is an access network device and the second communication node is a core network device;
in response to performing an NG-based handover, receiving the first information sent by the first communication node via a handover failure message or a handover request response message, wherein the first communication node is an access network device and the second communication node is a core network device; or
in response to performing an Xn-based handover, receiving the first information sent by the first communication node via a handover failure message or a handover request response message, wherein the first communication node is an access network device and the second communication node is an access network device.

18. The method according to claim 11, wherein receiving the first information sent by the first communication node comprises:
receiving the first information sent by the first communication node via an attach request message; or
receiving the first information sent by the first communication node via a register request message,
wherein the first communication node is a UE, and the second communication node is a core network device.

19. The method according to any one of claims 16 to 18, wherein receiving the first information sent by the first communication node comprises:
receiving the first information sent by the first communication node at a granularity of UE, PDU session, or QoS flow.

20. The method according to claim 11, wherein the first communication node is a UE, the second communication node is a base station, and the method further comprises:
in response to the base station determining, based on the capability, that the UE supports packet discarding based on a PDU, configuring, by the base station, an uplink parameter of the packet discarding based on the PDU and/or a parameter of packet discarding based on PDU set importance (PSI) in a congestion condition.

21. The method according to claim 20, wherein receiving the first information sent by the first communication node comprises:
receiving the first information sent by the first communication node at a granularity of UE or data radio bearer (DRB).

22. An information indication apparatus, comprising:
a sending module, configured to send first information to a second communication node,
wherein the first information indicates a capability of a first communication node of performing quality of service (QoS) handling based on a packet set.

23. An information indication apparatus, comprising:
a receiving module, configured to receive first information sent by a first communication node;
wherein the first information indicates a capability of the first communication node of performing quality of service (QoS) handling based on a packet set.

24. A communication device, comprising:
at least one processor;
wherein the at least one processor is configured to invoke instructions to cause the communication device to perform the information indication method according to any one of claims 1 to 10, or the information indication method according to any one of claims 11 to 21.

25. A storage medium storing instructions that, when executed on a communication device, cause the communication device to perform the information indication method according to any one of claims 1 to 10, or the information indication method according to any one of claims 11 to 21.
